# EUROPEAN PATENT APPLICATION

(11) **EP 3 115 667 A1**
(43) Date of publication of application: **11.01.2017**
(21) Application number: 16178302.2
(22) Date of filing: 07.07.2016
(51) Int. Cl.: F16K 47/04, F16K 47/08, F16K 3/26

(54) **REGULATING VALVE**

(30) Priority: 10.07.2015 JP 2015138769
(71) Applicant: Azbil Corporation, Chiyoda-ku Tokyo 100-6419 (JP)
(72) Inventor: NITTA, Masashi, Tokyo, Tokyo 100-6419 (JP)
(74) Representative: Lavoix

(57) **Abstract**

To provide a regulating valve of which stability of an operation is high, a regulating valve is disclosed that includes a valve box (1) in which a first flow channel (1a) and a second flow channel (1b) are formed; a cage (2) having a first throttle portion (20) provided in a boundary (1c) between the first flow channel and the second flow channel; a plug head having a second throttle portion (42) slidably inserted into an inside of the cage; and a guide ring (3) slidably holding a plug guide holding the plug head. In a closed state of the regulating valve, a distance between a through-hole of the first throttle portion and an end portion of the plug head on the other end side is equal to a distance between a through-hole of the second throttle portion and an end portion of the cage on the opened one end side.

## Description

### [Technical Field]

The present invention relates to a regulating valve and, for example, to a cage-type single seat regulating valve.

### [Background Art]

In the related art, in a general single seat regulating valve (for example, see JP 2010-054019 A and JP 2000-811663 A), in a case where a differential pressure of a liquid passing through the inside of the regulating valve is large, cavitation is known to occur. Cavitation is a phenomenon in which air bubbles are generated in liquid and generated air bubbles disappear by a pressure difference when the liquid passes through the inside of the regulating valve. In a case where the cavitation occurs, vibration and noise which cannot be tolerated as those in the regulating valve are generated and there is a concern that an inner wall of the regulating valve becomes damaged (erosion) by a high impact pressure generated when the air bubbles disappear.

As the related art for suppressing the occurrence of the cavitation in such a regulating valve, a cage-type pressure reducing device, which reduces a pressure of a high pressure fluid by providing a fixed cage portion having various holes and two variable cage portions having various holes of which the hole opening areas are variable, is disclosed, for example, in JP 2011-236962 A.

### [Summary of the Invention]

### [Problem that the Invention is to Solve]

However, in the regulating valve having a configuration to reduce the pressure by a plurality of variable cage portions (hereinafter, also referred to as "variable throttle portions") as illustrated in PTL 3, it is revealed that an operation of the regulating valve is unstable depending on the opening order of each of the variable throttle portions by a study conducted by the present inventor prior to the present application. That is, as illustrated in Fig. 4 of PTL 3, in the regulating valve configured to open a variable throttle portion of a second half stage earlier than a variable throttle portion of a first half stage with respect to a flow of a fluid, vibration and noise are generated and there is a concern that an unstable behavior is exhibited.

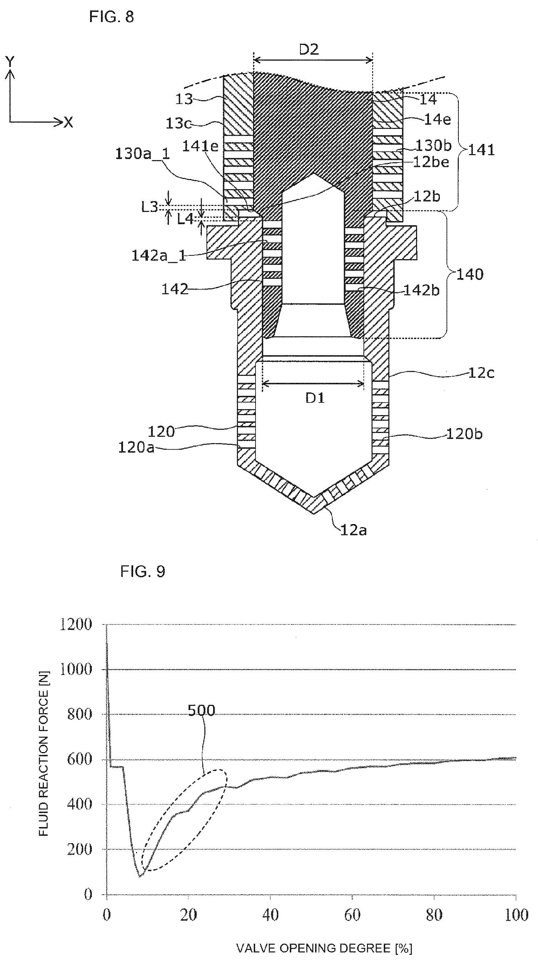

Fig. 9 is a graph illustrating characteristics of a fluid reaction force of a regulating valve having two variable throttle portions of the related art.

Here, the fluid reaction force is a force which is received by the regulating valve from a fluid when the fluid is introduced into the regulating valve. In the same figure, a vertical axis indicates the fluid reaction force with respect to a plug in the regulating valve and a horizontal axis indicates a valve opening degree of the regulating valve. In addition, in the same figure, the characteristics of the fluid reaction force of the regulating valve of the related art have a configuration that a plurality of variable throttle portions are provided and that the variable throttle portion of the second half stage is opened earlier than the variable throttle portion of the first half stage, are illustrated.

In a case where the variable throttle portion of the second half stage is opened earlier than the variable throttle portion of the first half stage in the regulating valve having the plurality of variable throttle portions, as indicated by reference numeral 500 of Fig. 9, it appears as a state where a gradient of the fluid reaction force with respect to the valve opening degree is largely "positive". In a case where the positive gradient of the fluid reaction force is larger than the rigidity of a setting/operating device of the regulating valve, vibration and noise are likely to be generated and the operation of the regulating valve is likely to be unstable.

The invention is made in view of the problem described above and an object of the invention is to provide a regulating valve of which stability of an operation is high.

### [Means for solving the problem]

According to the invention, there is provided a regulating valve including: a valve box in which a first flow channel and a second flow channel are formed; a cage which is formed in a cylindrical shape opened at one end and having a bottom portion at the other end, has a first throttle portion including through-holes penetrating a side wall on the other end side having the bottom portion, and of which an opened one end is disposed within the second flow channel and the other end having the bottom portion is disposed within the first flow channel; a plug which has a plug head which is formed in a cylindrical shape, has a second throttle portion including through-holes penetrating a side wall on one end side, is inserted into an inside of the cage, and is slidably provided by making the other end side to be a bottom portion side of the cage, and a plug guide holding the plug head; and a guide ring which is formed in a cylindrical shape, of which one end is fixed on the second flow channel side of the valve box, and which slidably holds the plug guide on an inside of a side wall. In a closed state in which the first throttle portion is closed by the side wall of the plug head on the other end side and the second throttle portion is closed by the side wall of the cage on the opened one end side, a distance between a through-hole of the first throttle portion and an end portion of the plug head on the other end side is equal to a distance between the through-hole of the second throttle portion and an end portion of the cage on the opened one end side.

In the regulating valve described above, the first throttle portion may be configured of a plurality of through-holes arranged in a staggered layout.

In the regulating valve described above, the second throttle portion may be configured of a plurality of through-holes arranged in a staggered layout.

In the regulating valve described above, the guide ring, of which the other end may be in contact with the opened one end of the cage, may have a third throttle portion including through-holes penetrating the side wall on the other end side, and a gap may be formed between an inner peripheral surface of the side wall in which the third throttle portion of the guide ring is formed and the plug.

Moreover, in the above description, as an example, reference numerals in the drawings corresponding to configuration elements of the invention are designated in parentheses.

### [Advantage of the Invention]

According to the invention, it is possible to provide the regulating valve of which stability of an operation is high by the above description.

### [Brief Description of the Drawings]

[Fig. 1] Fig. 1 is a view schematically illustrating a cross-sectional structure of a regulating valve according to Embodiment 1.
[Fig. 2] Fig. 2 is a view schematically illustrating a cross-sectional structure of a main portion (trim) of the regulating valve illustrated in Fig. 1.
[Fig. 3] Fig. 3 is a view schematically illustrating a planar structure of a variable throttle portion in the regulating valve according to Embodiment 1.
[Fig. 4A] Fig. 4A is a view illustrating open states of the variable throttle portion on the cage side and the variable throttle portion on a plug head side according to sliding of the plug head.
[Fig. 4B] Fig. 4B is a view illustrating the open states of the variable throttle portion on the cage side and the variable throttle portion on the plug head side according to sliding of the plug head.
[Fig. 4C] Fig. 4C is a view illustrating the open states of the variable throttle portion on the cage side and the variable throttle portion on the plug head side according to sliding of the plug head.
[Fig. 5] Fig. 5 is a graph illustrating characteristics of a fluid reaction force of the regulating valve according to Embodiment 1.
[Fig. 6] Fig. 6 is a view schematically illustrating a cross-sectional structure of a regulating valve according to Embodiment 2.
[Fig. 7] Fig. 7 is a view schematically illustrating a cross-sectional structure of a regulating valve according to Embodiment 3.
[Fig. 8] Fig. 8 is a view schematically illustrating a cross-sectional structure of a main portion (trim) of the regulating valve illustrated in Fig. 7.
[Fig. 9] Fig. 9 is a graph illustrating characteristics of a fluid reaction force of a regulating valve having two variable throttle portions according to the related art.

### [Mode for carrying out the Invention]

Hereinafter, embodiments of the invention will be described with reference to the drawings.

### «Embodiment 1»

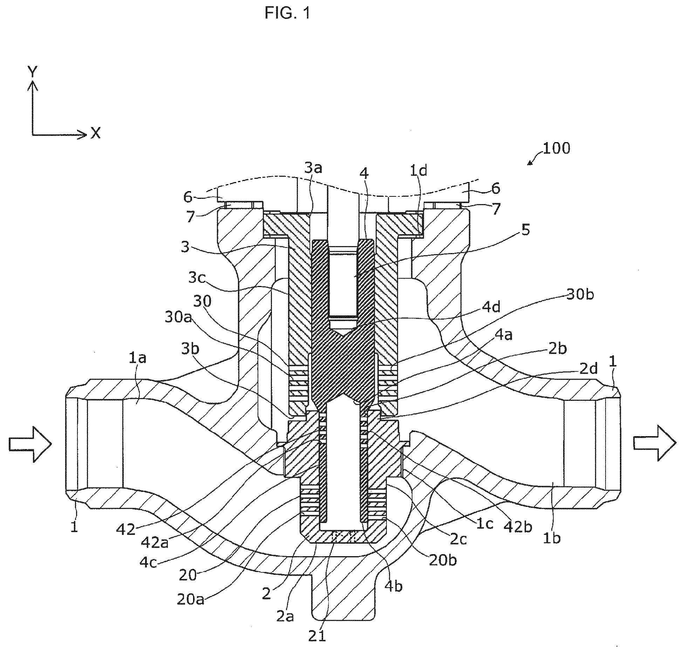

Fig. 1 is a view schematically illustrating a cross-sectional structure of a regulating valve according to Embodiment 1.

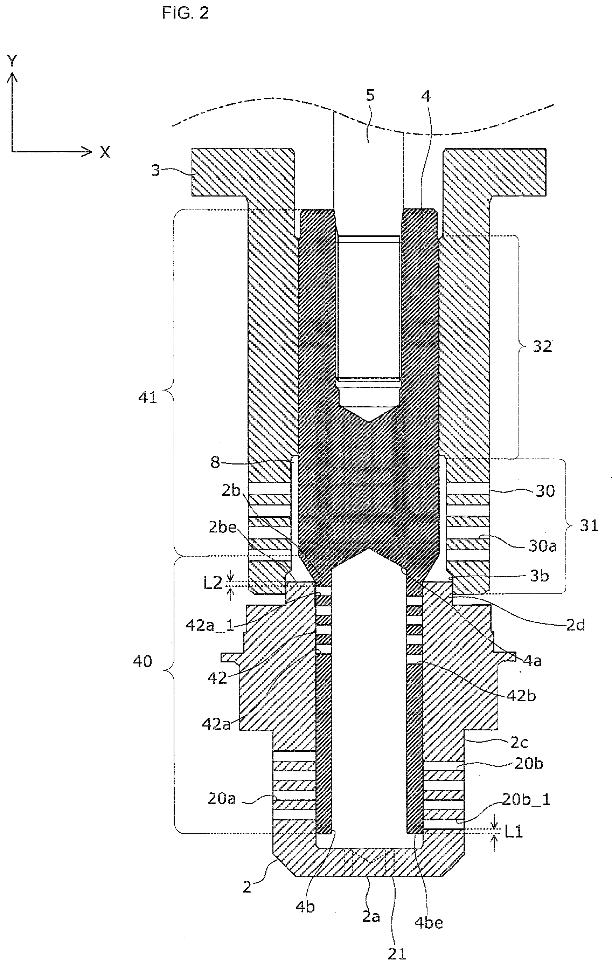

Fig. 2 is a view schematically illustrating a cross-sectional structure of a main portion (trim) of the regulating valve illustrated in Fig. 1.

A regulating valve 100 illustrated in Fig. 1 is a cage-type single seat regulating valve which controls a flow of a fluid from a flow channel of one side to a flow channel of the other side. The regulating valve 100 has two variable throttle portions provided between the two flow channels, opens the variable throttle portions of a first half stage and a second half stage according to the sliding of the plug head as the valve body, and then continuously changes opening areas of both the variable throttle portions. Therefore, a pressure of a fluid flowing through the flow channel of one side is reduced and then the fluid flows through the flow channel of the other side.

Moreover, here, the regulating valve 100 is described to discharge the fluid, which is introduced into a flow channel 1 a, from a flow channel 1b, but the regulating valve 100 is not limited to the embodiment. In addition, the fluid introduced into the regulating valve 100 may be liquid or gas, and is not particularly limited.

As illustrated in Fig. 1, the regulating valve 100 includes a valve box 1, a cage 2, a guide ring 3, a plug 4, a stem 5, and a lid body 6. The functional portions configuring the regulating valve 100 are formed of a material (for example, metal) capable of preventing deformation or corrosion due to circulation of the fluid.

Two flow channels 1 a and 1 b are formed on an inside of the valve box (body) 1, and a boundary portion 1c between the flow channel 1 a and the flow channel 1b has a shape capable of mounting the cage 2.

The cage 2 is formed in a cylindrical shape of which one end has a bottom. As illustrated in Figs. 1 and 2, the cage 2 is fixed to a boundary portion 1 c of the valve box 1 so that a bottom portion 2a as one end of the cage 2 is disposed within the flow channel 1 a and an opening portion 2b as the other end of the cage 2 is disposed within the flow channel 1b. Moreover, a sheet gasket may be appropriately sandwiched between the cage 2 and the valve box 1.

The cage 2 has a variable throttle portion 20 for throttling a flow rate of the fluid from the flow channel 1 a to the inside of the cage 2 to guide the fluid. The variable throttle portion 20 is configured of through-holes penetrating a side wall 2c of the cage 2 and the opening area (total opening areas of the through-holes) is variable in accordance with sliding of a plug head 40 which will be described later. Moreover, details of the variable throttle portion 20 will be described later.

As illustrated in Fig. 2, the plug 4 has the plug head 40 as a valve body and a plug guide 41 supporting the plug head 40. Moreover, in Figs. 1 and 2, an example in which the plug head 40 and the plug guide 41 are integrally formed is illustrated, but the invention is not limited to the example. The plug head 40 and the plug guide 41 are formed of members separated from each other, and may be coupled to each other.

The plug head 40 is formed in a cylindrical shape. As illustrated in Figs. 1 and 2, the plug head 40 is slidably inserted into the inside of the cage 2 such that one end 4a is the opening portion 2b side of the cage 2 and an opening portion 4b of the other end is the bottom portion 2a side of the cage 2. The plug head 40 has a variable throttle portion 42 for throttling a flow rate of the fluid from an inside of the plug head 40 to the flow channel 1b to guide the fluid. The variable throttle portion 42 is configured of through-holes penetrating a side wall 4c of the plug head 40 on the one end 4a side and an opening area (total opening areas of the through-holes) is variable in accordance with the sliding of the plug head 40 which will be described later. Moreover, details of the variable throttle portion 42 will be described later.

The guide ring 3 is a member for guiding a movement of the plug 4 in accordance with forward and backward movements of the stem 5, is formed in a cylindrical shape, and slidably holds the plug guide 41 on the inside of a side wall 3c.

In addition, an opening portion 3a of the guide ring 3 on one end side is fixed to the flow channel 1 b side of the valve box 1. Specifically, as illustrated in Fig. 1, an edge of the opening portion 3a of the guide ring 3 on one end side is formed in an L-shape in a sectional view and the L-shaped portion is mounted on a groove portion 1d formed in an upper portion of the valve box 1. Moreover, a gasket may be sandwiched between the guide ring 3 and the groove portion 1 d.

On the other hand, an opening portion 3b of the guide ring 3 on the other end side is disposed to come into contact with the opening portion 2b of the cage 2. Specifically, as illustrated in Figs. 1 and 2, a projection portion 2d formed in the opening portion 2b of the cage 2 is fitted into an inner peripheral portion of the opening portion 3b of the guide ring 3 from the outside and thereby the guide ring 3 and the cage 2 are coupled.

In addition, a fixed throttle portion 30 for throttling a flow rate of the fluid from the inside of the guide ring 3 to the flow channel 1 b to guide the fluid is formed in a side wall 31 on the opening portion 3b side in the guide ring 3. The fixed throttle portion 30 is configured of a plurality of through-holes 30a penetrating the side wall 3c on the opening portion 3b side in the guide ring 3.

The fixed throttle portion 30 is configured such that the opening area thereof is constant irrespective of the sliding of the plug head 40. Specifically, a gap (space) 8 is formed between an inner peripheral surface of the side wall 3c of the guide ring 3 on the opening portion 3b side and the plug guide 41 and thereby through-holes of the fixed throttle portion 30 are configured not to be closed by sliding of the plug head 40. As a method for forming the gap 8, for example, as illustrated in Fig. 2, an inner diameter of the side wall 3c may be greater than an inner diameter of a side wall 3d by forming the side wall 3c on the opening portion 3b side in the guide ring 3 thinner than the side wall 3d on the opening portion 3a side.

The fluid is movable between the inside of the guide ring 3 and the flow channel 1b via the fixed throttle portion 30 by configuring the guide ring 3 as described above irrespective of the sliding of the plug 4.

The stem 5 is a rod-shaped member penetrating the valve body 1 and is connected to the plug 4. One end of the stem 5 is inserted and fixed to a concave portion 4d formed in the plug guide 41 and the other end of the stem 5 is connected to an setting/operating portion (not illustrated) for operating the plug 4 of the regulating valve 100. The setting/operating portion moves the stem 5 forward and backward in one direction and thereby the plug 4 connected to the stem 5 is slid on the inside of the cage 2 and the guide ring 3 in the Y axis direction.

The lid body 6 is disposed so as to cover an opening portion of an upper portion of the valve box 1. Specifically, as illustrated in Fig. 1, the lid body 6 is fixed to the upper portion of the valve box 1 by bolts 7 so as to sandwich the guide ring 3 between the lid body 6 and the valve box 1 (groove portion 1 d).

Next, the variable throttle portions 20 and 42 will be described.

As described above, the variable throttle portions 20 and 42 are functional portions for regulating the flow rate of the fluid flowing from the flow channel 1a to the flow channel 1 b.

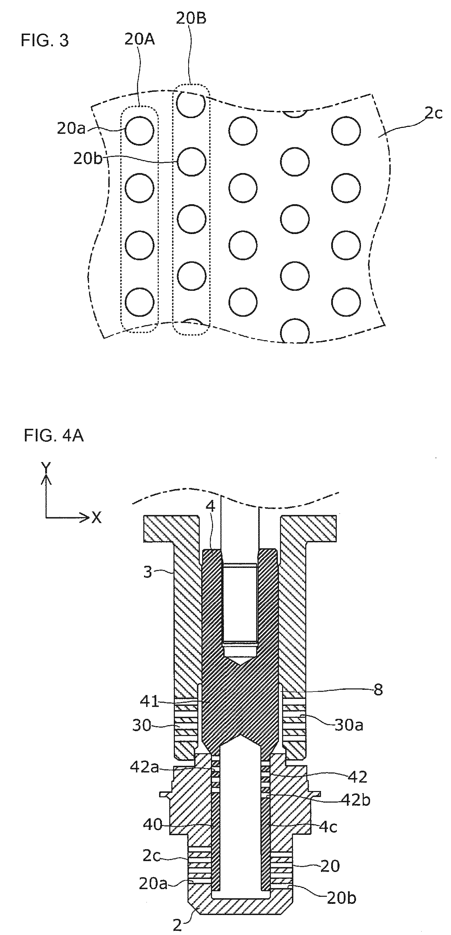

Fig. 3 is a plan view schematically illustrating a structure of the variable throttle portion 20.

In the same figure, the plan view is illustrated when the side wall 2c of the cage 2 is viewed from the outside.

Moreover, in the embodiment, the variable throttle portion 20 and the variable throttle portion 42 have the same configuration and the variable throttle portion 20 will be described in the following description.

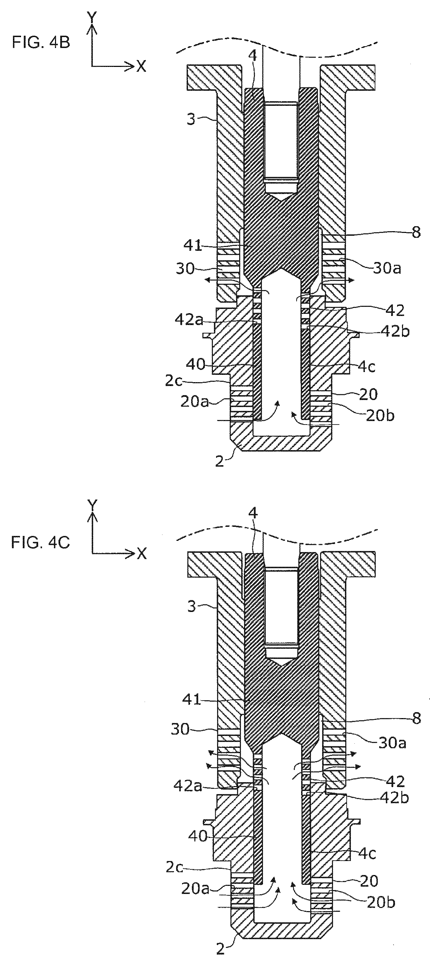

The variable throttle portion 20 is configured of a plurality of through-holes 20a and 20b which are arranged, for example, in a staggered layout. Specifically, as illustrated in Fig. 3, a through-hole group 20A of one row configured of a plurality of through-holes 20a and a through-hole group 20B of one row configured of a plurality of through-holes 20b are alternately arranged by shifting central axes of the through-holes 20a and 20b from each other. As illustrated in Fig. 4, a shape of each of the through-holes 20a and 20b may be a circular shape or may be a polygonal shape, and is not particularly limited.

In addition, the through-holes 20a and 20b of the variable throttle portion 20 are formed in the side wall 2c of the cage 2 on the bottom portion 2a side, and the through-holes 42a and 42b of the variable throttle portion 42 are formed in the side wall 4c of the plug head 40 on a bottom portion 4a side.

Specifically, as illustrated in Fig. 2, in a closed state where the variable throttle portion 20 is closed by the side wall 4c of the plug head 40 on the other end side and the variable throttle portion 42 is closed by the side wall 2c of the opened opening portion 2b of the cage 2, the through-holes of the variable throttle portions 20 and 42 are respectively formed in a position in which a distance between the through-holes 20a and b of the variable throttle portion 20 and an end portion 4be of the plug head 40 on the opening portion 4b side is equal to a distance between a through-hole 42_1 of the variable throttle portion 42 and an end portion 2be of the opening portion 2b of the cage 2.

Here, the distance between the through-holes 20a and b of the variable throttle portion 20 and the end portion 4be of the plug head 40 on the opening portion 4b side is, as illustrated in Fig. 2, a distance L1 between a through-hole 20b_1 formed on the bottom portion 2a side, which is the lowest among the plurality of through-holes 20a and 20b configuring the variable throttle portion 20 in a Y axis direction, and the end portion 4be of the plug head 40. In addition, the distance between the through-hole 42_1 of the variable throttle portion 42 and the end portion 2be of the opening portion 2b of the cage 2 is, as illustrated in Fig. 2, a distance L2 between a through-hole 42a_1 formed in a portion which is the closest to the plug guide 41 side in the Y axis direction among the plurality of through-holes 42a and 42b configuring the variable throttle portion 42 and the end portion 2be of the cage 2.

According to this configuration, when the plug head 40 is slid in a positive direction of the Y axis, the through-holes 20a and 20b of the variable throttle portion 20 and the through-holes 42a and 42b of the variable throttle portion 42 are started to be simultaneously opened, and the opening area of the variable throttle portion 20 and the opening area of the variable throttle portion 42 are continuously increased.

Next, a control of the fluid by the regulating valve 100 will be described.

Figs. 4A to 4C are views illustrating open states of the variable throttle portion on the cage side and the variable throttle portion on the plug head side according to the sliding of the plug head.

Fig. 4A illustrates a state of a main portion of the regulating valve 100 when both the variable throttle portion 20 and the variable throttle portion 42 are closed, Fig. 4B illustrates a state of the main portion of the regulating valve 100 when the variable throttle portion 20 and the variable throttle portion 42 are started to be simultaneously opened, and Fig. 4C illustrates a state of the main portion of the regulating valve 100 when both the variable throttle portion 20 and the variable throttle portion 42 are opened.

First, as illustrated in Fig. 4A, the valve opening degree of the regulating valve 100 is in the closed state of 0%, the variable throttle portion 20 is closed by the side wall 4c of the plug head 40 on the other end side and the variable throttle portion 42 is closed by the side wall 2c of the opened opening portion 2b of the cage 2. Specifically, all of the through-holes 20a and 20b of the variable throttle portion 20 on the cage 2 side are closed by the side wall 4c of the plug head 40, and the through-holes 42a and 42b of the variable throttle portion 42 on the plug head 40 side are closed by the side wall 2c of the cage 2. In this state, the movement of the fluid from the flow channel 1 a to the flow channel 1 b is blocked.

Next, as illustrated in Fig. 4B, if the plug head 40 is slid from the initial state described above in a direction (positive direction of the Y axis) separated from the bottom portion 2a of the cage 2, the variable throttle portion 42 on the plug head 40 and the variable throttle portion 20 on the cage 2 side are started to be simultaneously opened. Therefore, since the flow channel 1 a, the inside (inside of the plug head 40) of the cage 2, the inside of the guide ring 3, and the flow channel 1b communicate with each other via the variable throttle portion 20, the variable throttle portion 42, and the fixed throttle portion 30, the fluid is started to flow from the flow channel 1 a to the flow channel 1 b.

Thereafter, as illustrated in Fig. 4C, if the plug head 40 is further slid in a direction separated from the bottom portion 2a of the cage 2, the opening areas of the variable throttle portion 20 of the cage 2 side and the variable throttle portion 42 of the plug head 40 side are further increased and the flow rate of the fluid introduced from the flow channel 1 a into the flow path 1 b is further increased.

It is preferable that a change rate of the opening area of the variable throttle portion 20, that is, a ratio of a change of the opening area with respect to the valve opening degree (lift amount of the plug head 40) is equal to the change rate of the opening area of the variable throttle portion 20 in accordance with the sliding of the plug head 40, but the invention is not limited to the configuration. The change rates of the opening areas of the variable throttle portions 20 and 42 may be values which are different from each other in accordance with a required stability of the regulating valve.

Next, advantages of the regulating valve 100 according to Embodiment 1 will be described.

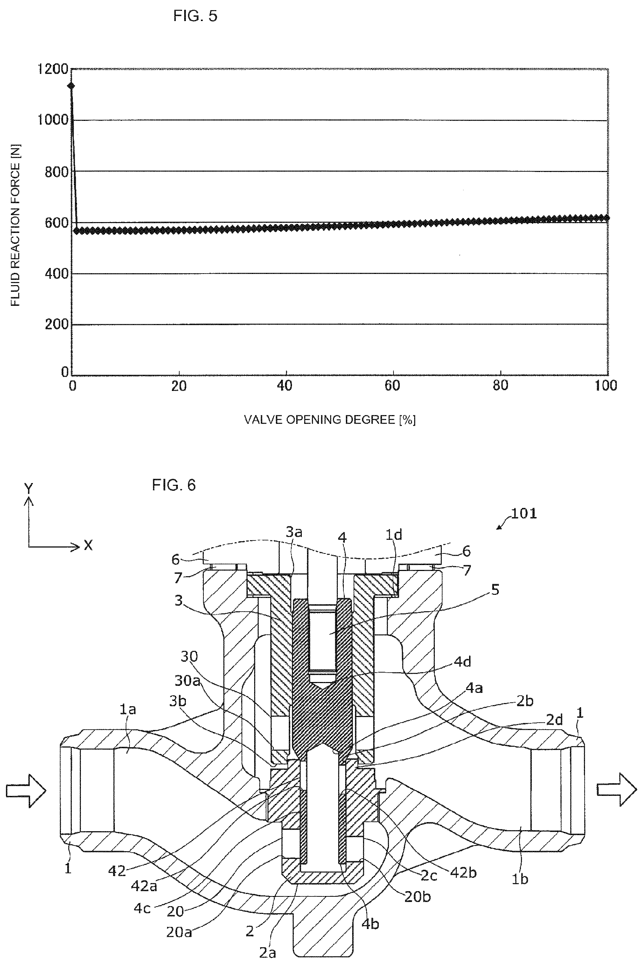

Fig. 5 is a graph illustrating characteristics of a fluid reaction force of the regulating valve according to Embodiment 1. In the same figure, a vertical axis indicates the fluid reaction force of the regulating valve 100 and the fluid reaction force received by the plug 4 from the fluid, and a horizontal axis indicates the valve opening degree of the regulating valve 100.

As illustrated in Fig. 5, according to the regulating valve 100 of Embodiment 1, the fluid reaction force with respect to the plug 4 indicates the maximum value in the initial state in which the valve opening degree is 0%. Thereafter, the valve opening degree is increased, and if the variable throttle portion 20 of the first half stage and the variable throttle portion 42 of the second half stage are started to be simultaneously opened, the fluid reaction force is sharply decreased. Then, when the valve opening degree is further increased, if both the opening areas of the variable throttle portions 20 and 42 are continuously increased, the fluid reaction force is gradually increased. In this case, a ratio of the increase of the fluid reaction force, that is, the gradient of the fluid reaction force with respect to the valve opening degree becomes "positive" and is sufficiently small compared to the gradient (see Fig. 9) of the fluid reaction force of the regulating valve of the related art described above. Therefore, it is possible to suppress generation of vibration and noise, and to increase stability of the operation of the regulating valve compared to the regulating valve of the related art.

In addition, according to the regulating valve 100 of Embodiment 1, since the positive gradient of the fluid reaction force with respect to the valve opening degree is sufficiently small, the operation of the regulating valve is stabilized compared to the regulating valve of the related art. Therefore, it is possible to suppress the rigidity of the setting/operating device of the regulating valve low and to decrease a manufacturing cost of the setting/operating device.

In addition, according to the regulating valve 100 of Embodiment 1, the variable throttle portions 20 and 42 are formed by the plurality of through-holes arranged in a staggered layout and thereby it is possible to suppress vibration of the pressure of the fluid when increasing the valve opening degree by the sliding of the plug 4. Therefore, it is possible to further smoothly increase the fluid reaction force received by the regulating valve 100 with respect to the valve opening degree.

### «Embodiment 2»

Fig. 6 is a view schematically illustrating a cross-sectional structure of a regulating valve according to Embodiment 2.

A regulating valve 101 illustrated in Fig. 6 is different from the regulating valve 100 according to Embodiment 1 in a point that each throttle portion is not configured by various holes but configured by a window-shaped through-hole and is similar to the regulating valve 100 according to Embodiment 1 in other points.

According to this configuration, similar to the regulating valve 100 according to Embodiment 1, it is possible to increase stability of an operation of the regulating valve and to decrease a manufacturing cost of a setting/operating device of the regulating valve.

### «Embodiment 3»

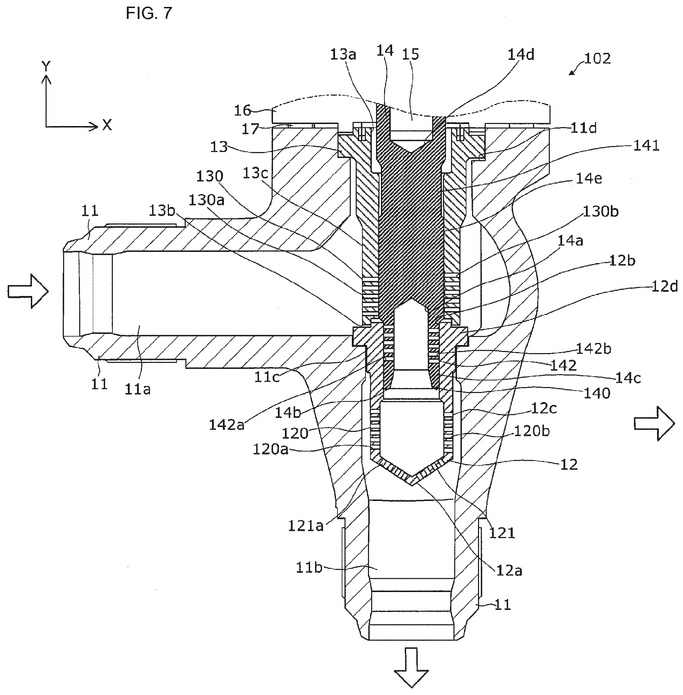

Fig. 7 is a view schematically illustrating a cross-sectional structure of a regulating valve according to Embodiment 3.

Fig. 8 is a view schematically illustrating a cross-sectional structure of a main portion (trim) of the regulating valve illustrated in Fig. 7.

A regulating valve 102 illustrated in Fig. 7 is an angle-type single seat regulating valve, in which a flow channel of the fluid is a right-angle shape, and has two variable throttle portions of which opening timings are equal to each other similar to the regulating valve 100 according to Embodiment 1. According to the regulating valve 102, a fluid introduced into a flow channel 11 a flows in a positive direction of an X axis, is changed in a negative direction of a Y axis through a main portion of the regulating valve 102, and is discharged from a flow channel 11 b. Moreover, the fluid introduced into the regulating valve 102 may be liquid or gas, and is not particularly limited.

Specifically, the regulating valve 102 includes a valve box 11, a cage 12, a guide ring 13, a plug 14, a stem 15, and a lid body 16. The functional portions configuring the regulating valve 102 are formed of a material (for example, metal) capable of preventing deformation or corrosion due to circulation of the fluid.

Two flow channels 11 a and 11 b are formed on an inside of the valve box (body) 11. Each of the flow channels 11 a and 11 b is disposed such that the central axes thereof form a right angle. In addition, a boundary portion 11 c between the flow channel 11 a and the flow channel 11 b has a shape on which a cage 12 is mountable.

The cage 12 is formed in a cylindrical shape having a bottom at one end. As illustrated in Fig. 7, the cage 12 is fixed to the boundary portion 11c of the valve box 11 so that an opening portion 12b of the cage 12 on one end side is disposed on the inside of the flow channel 11 a and a bottom portion 12a of the cage 12 on the other end side is disposed within the flow channel 11 b. Moreover, a sheet gasket may be sandwiched between the cage 12 and the valve box 11.

The cage 12 has fixed throttle portions 120 and 121 for throttling a flow rate of the fluid from an inside of the cage 12 to the flow channel 11 b to guide the fluid. The fixed throttle portion 120 is configured of through-holes 120a and 120b penetrating a side wall 12c of the cage 12 and an opening area thereof is constant irrespective of the sliding of a plug head 140 which will be described later. In addition, the fixed throttle portion 121 is configured of through-holes 121 a penetrating a bottom portion 12a of the cage 12 and an opening area thereof is constant irrespective of the sliding of the plug head 140 similar to the fixed throttle portion 120.

Moreover, the opening area of the throttle portion of the cage 12 may be constant irrespective of the sliding of the plug head 140 and the throttle portion is not limited to the structure illustrated in Fig. 7. For example, the fixed throttle portion may be provided only one of the side surface and the bottom surface of the cage 12 without providing the fixed throttle portions 120 and 121 on both the side surface and the bottom surface of the cage 12.

The plug 14 has the plug head 140 as a valve body and the plug guide 141 supporting the plug head 140.

The plug head 140 is formed in a cylindrical shape and is slidably inserted into an inside of the cage 12 such that one end 14a side is the opening portion 12b side of the cage 12 and the opening portion 14b on the other end side is the bottom portion 12a side of the cage 12.

A variable throttle portion 142 for throttling a flow rate of the fluid from the flow channel 11 a side to an inside of the plug head 140 to guide the fluid is formed on a side wall 14c of the plug head 140. The variable throttle portion 142 is configured of the through-holes 142a and 142b penetrating the side wall 14c of the plug head 140, and an opening area (total opening areas of the through-holes) thereof is variable in accordance with the sliding of the plug head 140. Moreover, details of the variable throttle portion 142 will be described later.

The plug guide 141 is a rod-shaped member coupled to the plug head 140 coaxially with the plug head 140 and, for example, is integrally formed with the plug head 140. One end of the plug guide 141 is coupled to the plug head 140 and the other end thereof is held by the stem 15. In addition, as illustrated in Fig. 8, an outer diameter D2 of the plug guide 141 is greater than an outer diameter D1 of the plug head 140.

The guide ring 13 is a member for guiding the movement of the plug 14 in accordance with forward and backward movements of the stem 15, is formed in a cylindrical shape, and slidably holds the plug guide 141 on the inside thereof.

In addition, an opening portion 13a of the guide ring 3 on one end side is fixed on the flow channel 11 a side of the valve box 11. Specifically, as illustrated in Fig. 7, an edge of the opening portion 13a of the guide ring 13 on one end side is formed in an L-shape in a sectional view and the L-shaped portion is mounted on a groove portion 11 d formed in an upper portion of the valve box 11. Moreover, a gasket may be sandwiched between the guide ring 13 and the groove portion 11 d.

On the other hand, an opening portion 13b of the guide ring 13 on the other end side is disposed to come into contact with the opening portion 12b of the cage 12. Specifically, as illustrated in Fig. 7, a projection portion 12d formed in the opening portion 12b of the cage 12 is fitted into an inner peripheral portion of the opening portion 13b of the guide ring 13 from outside and thereby the guide ring 13 and the cage 12 are coupled.

In addition, a variable throttle portion 130 for throttling a flow rate of the fluid from the flow channel 11 a to the inside of the guide ring 13 to guide the fluid is formed in a side wall 13c on the opening portion 13b side in the guide ring 13. The variable throttle portion 130 is configured of a plurality of through-holes 130a and 130b penetrating the side wall 13c on the opening portion 13b side in the guide ring 13. Moreover, details of the fixed throttle portion 130 will be described later.

As described above, an outer diameter of the plug guide 141 is greater than an outer diameter of the plug head 140 and the plug guide 141 is slidably held on the inside of the side wall 131 of the guide ring 13. Therefore, if the plug head 140 is continuously slid in a positive direction of a Y axis, a space is formed between an inner peripheral surface of the side wall 13c of the guide ring 13 and the plug 14 (plug head 140) and it is possible to introduce the fluid from the flow channel 11 a to the inside of the guide ring 13.

The stem 15 is a rod-shaped member penetrating the valve body 11 and connected to the plug 14. One end of the stem 15 is inserted and fixed into and to a concave portion 14d formed in the plug guide 141 and the other end of the stem 15 is connected to an setting/operating portion (not illustrated) of the regulating valve 102. The setting/operating portion moves the stem 15 forward and backward in one direction and thereby the plug 14 connected to the stem 15 is slid on the inside of the guide ring 13 and the cage 12 in the Y axis direction.

The lid body 16 is disposed so as to cover an opening portion of an upper portion of the valve box 11. Specifically, as illustrated in Fig. 7, the lid body 16 is fixed to the upper portion of the valve box 11 by bolts 17 so as to sandwich the guide ring 13 between the lid body 16 and the groove portion 11 d formed in the upper portion of the valve box 11.

Here, the variable throttle portion 130 on the guide ring 13 side and the variable throttle portion 142 on the plug head 140 side will be described.

As described above, the variable throttle portion 130 and the variable throttle portion 142 are functional portions for regulating the flow rate of the fluid flowing from the flow channel 11 a to the flow channel 11 b, and are configured by a plurality of through-holes arranged in a staggered layout similar to the variable throttle portions 20 and 42 in the regulating valve 100 according to Embodiment 1 described above.

The through-holes 130a and 130b of the variable throttle portion 130 are formed on the side wall 131 of the guide ring 13 on the opening portion 13b side. The through-holes 142a and 142b of the variable throttle portion 142 are formed on the side wall 14c of the plug head 140.

Specifically, as illustrated in Fig. 8, in a closed state where the variable throttle portion 130 is closed by the side wall 14e of the plug guide 141 on the plug head 140 side and the variable throttle portion 142 is closed by the side wall 12c of the cage 12 on the opening portion 12b side, the through-holes of the variable throttle portions 130 and 142 are respectively formed in a position in which a distance between the through-holes 130a and 130b of the variable throttle portion 130 and an end portion 141 e on the plug guide 141 on the plug head 140 side is equal to a distance between the through-holes 142a and 142b of the variable throttle portion 142 and an end portion 12be of the opening portion 12b of the cage 12.

Here, the distance between the through-holes 130a and 130b of the variable throttle portion 130 and the end portion 141 e of the plug guide 141 in the plug head 140 side is a distance L3 between a through-hole 130a_1 formed in a portion of the closest to the cage 12 side in the Y axis direction among the plurality of through-holes 130a and 130b configuring the variable throttle portion 130 and the end portion 141e of the plug guide 141. In addition, the distance between the through-holes 142a and 142b of the variable throttle portion 142 and the end portion 12be of the opening portion 12b of the cage 12 is a distance L4 between a through-hole 142a_1 formed in a portion which is the closest to the plug guide 141 side in the Y axis direction among the plurality of through-holes 142a and 142b configuring the variable throttle portion 142 and the end portion 12be of the cage 12.

According to this configuration, when the plug head 140 is slid in a positive direction of the Y axis, the through-holes 130a and 130b of the variable throttle portion 130 and the through-holes 142a and 142b of the variable throttle portion 142 are simultaneously opened.

Next, a control of the fluid by the regulating valve 102 will be described.

First, the valve opening degree of the regulating valve 102 is in the closed state of 0%, the variable throttle portion 130 is closed by the side wall 14e of the plug guide 141 on the plug head 140 side and the variable throttle portion 142 is closed by the side wall 12c of the cage 2 on the opening portion 12b side. Specifically, all of the through-holes 130a and 130b configuring the variable throttle portion 130 are closed by the side wall 14e of the plug guide 141, and all of the through-holes 142a and 142b configuring the variable throttle portion 142 are closed by the side wall of the cage 12 on the opening portion 12b side. In this case, since the fixed throttle portions 120 and 121 of the cage 12 are opened, the flow channel 11 b and the inside of the plug head 140 communicate with each other via the fixed throttle portions 120 and 121 of the cage 12.

In the closed state, both the opening area of the variable throttle portion 130 on the guide ring 13 side and the opening area of the variable throttle portion 142 on the plug head 140 side become zero, and circulation of the fluid from the flow channel 11 a to the flow channel 11 b is blocked.

Next, if the plug head 140 is slid from the initial state in a direction (Y direction) separated from the bottom portion 12a of the cage 12, the through-holes of the variable throttle portion 130 on the guide ring 13 side and the through-holes of the variable throttle portion 142 on the plug head 140 side are started to be simultaneously opened. Therefore, since the flow channel 11 a, the inside of the guide ring 13, the inside (inside of the cage 12) of the plug head 140, and the flow channel 11 b communicate with each other, the fluid is started to flow from the flow channel 11 a to the flow channel 11 b.

Thereafter, if the plug head 140 is further slid in the direction separated from the bottom portion 12a of the cage 12, the opening areas of the variable throttle portion 130 on the guide ring 13 side and the variable throttle portion 142 on the plug head 140 side are further increased, and the flow rate of the fluid flowing from the flow channel 11 a to the flow channel 11 b is increased.

As described above, according to the regulating valve 102 of Embodiment 3, similar to the regulating valve 100 of Embodiment 1, the variable throttle portion 130 of the first half stage and the variable throttle portion 142 of the second half stage are simultaneously opened, and both the opening areas of the variable throttle portions 130 and 142 are continuously increased. Therefore, it is possible to sufficiently reduce the gradient of the fluid reaction force with respect to the valve opening degree.

Therefore, according to the regulating valve 102 of Embodiment 3, similar to the regulating valve 100 of Embodiment 1, it is possible to increase stability of an operation of the regulating valve and to decrease a manufacturing cost of a setting/operating device of the regulating valve.

In addition, according to the regulating valve 102 of Embodiment 3, similar to the regulating valve 100 of Embodiment 1, since the variable throttle portions 130 and 142 are formed by the plurality of through-holes arranged in a staggered layout, it is possible to further smoothly increase the pressure of the fluid while suppressing vibration of the pressure of the fluid when increasing the valve opening degree by the sliding of the plug 14.

The invention is not limited to the embodiments and various modifications can be made. Such design modifications are also included in a scope of the present invention.

For example, in Embodiment 1, a case where the variable throttle portion 20 is configured of two through-hole groups 20A and 20B is illustrated (see Fig. 3), but the invention is not limited to the embodiment, and the variable throttle portion 20 may be configured of three or more through-hole groups. For example, three through-hole groups are prepared, central axes of through-holes configuring each through-hole group are shifted from central axes of through-holes of the adjacent through-hole group, and the three through-hole groups are disposed periodically side by side. Therefore, it is possible to further smoothly decrease the pressure of the fluid compared to a case of the two through-hole groups described above.

### [Description of Reference Numerals and Signs]

100, 101, 102: regulating valve
1, 11: valve box
2, 12: cage
3, 13: guide ring
4, 14: plug
40, 140: plug head
41, 141: plug guide
5, 15: stem
6, 16: lid body
1 a, 1 b, 11 a, 11 b: flow channel
1 c, 11c: boundary portion
20, 42, 130, 142: variable throttle portion
30, 120, 121: fixed throttle portion
20a, 20b, 42a, 42b, 130a, 142a, 30a, 120a, 120b, 121 a: through-hole.

## Claims

1. A regulating valve (100, 101) comprising:
a valve box (1) in which a first flow channel (1 a) and a second flow channel (1 b) are formed;
a cage (2) which is formed in a cylindrical shape opened at one end and comprising a bottom portion (2a) at the other end, the cage comprising a first throttle portion (20) including through-holes (20a, 20b) penetrating a side wall (2c) on the other end side having the bottom portion, and of which an opened one end (2b) is disposed within the second flow channel and the other end having the bottom portion is disposed within the first flow channel;
a plug (4) comprising a plug head (40) which is formed in a cylindrical shape, the plug comprising a second throttle portion (42) including through-holes (42a) penetrating a side wall (4c) on one end (4a) side, the plug is configured to be inserted into an inside of the cage, the plug is slidably provided by making the other end (4b) side to be a bottom portion side of the cage;
and a plug guide (41) configured to hold the plug head; and
a guide ring (3) which is formed in a cylindrical shape, one end (3a) of the guide ring is fixed on the second flow channel side of the valve box, the guide ring is configured to slidably hold the plug guide on an inside of a side wall (3c),
wherein in a closed state in which the first throttle portion (20) is closed by the side wall (4c) of the plug head on the other end side and the second throttle portion (42) is closed by the side wall (2c) of the cage on the opened one end side, a distance (L1) between the through-hole (20b_1) of the first throttle portion and the end portion (4be) of the plug head on the other end side is equal to a distance (L2) between the through-hole (42a_1) of the second throttle portion and the end portion (2be) of the cage on the opened one end side.

2. The regulating valve (100, 101) according to claim 1,
wherein the first throttle portion (20) comprises a plurality of through-holes (20a, 20b) arranged in a staggered layout.

3. The regulating valve (100, 101) according to claim 1 or 2,
wherein the second throttle portion (42) comprises a plurality of through-holes (42a, 52b) arranged in a staggered layout.

4. The regulating valve (100, 101) according to any one of claims 1 to 3,
wherein the guide ring, of which the other end (3b) is connected to the opened one end (2d) of the cage, has a third throttle portion (30) including through-holes (30a) penetrating the side wall (3c) on the other end side, and
wherein a gap (8) is formed between the plug guide and an inner peripheral surface of the side wall in which the third throttle portion of the guide ring is formed.

5. A regulating valve (102) comprising:
a valve box (11) in which a first flow channel (11 a) and a second flow channel (11 b) are formed;
a cage (12) which is formed in a cylindrical shape opened at one end and comprising a bottom portion at the other end, the cage comprises a first throttle portion (120) including through-holes penetrating at least one of the bottom portion and a side wall on the other end side having the bottom portion, the opened one end of the cage is disposed within the first flow channel (11 a) and the other end having the bottom portion is disposed within the second flow channel (11 b);
a plug (14) comprising a plug head (140) which is formed in a cylindrical shape, the plug comprising a second throttle portion (142) including through-holes penetrating the side wall, the plug is configured to be slidably inserted into an inside of the cage, and a rod-shaped plug guide (141) having an outer diameter greater than an outer diameter of the plug head (140) and coupled to the plug head (140) coaxially with the plug head (140); and
a guide ring (13) which is formed in a cylindrical shape, one end of the guide ring is in contact with the opened other end of the cage and the other end is fixed on the second flow channel side of the valve box, and which has a third throttle portion (130) including through-holes penetrating the side wall of the one end side, the guide ring is configured to slidably hold the plug guide (141) on an inside of the side wall,
wherein in a closed state in which the second throttle portion (142) is closed by the side wall of the cage on the opened one end side and the third throttle portion (130) is closed by the side wall of the plug head (140), a distance between the through-holes of the third throttle portion (130) and an end portion of the plug guide (141) on the plug head side is equal to a distance between the through-hole of the second throttle portion (142) and the end portion of the cage on the opened one end side.
